# EUROPEAN PATENT APPLICATION

(11) **EP 1 335 381 A1**
(43) Date of publication of application: **13.08.2003**
(21) Application number: 01981088.6
(22) Date of filing: 13.11.2001
(51) Int. Cl.: G11B 33/12, G06F 1/00, A63F 13/00

(54) **EXTERNAL STORAGE UNIT, AND INFORMATION PROCESSING UNIT HAVING THE UNIT**

(30) Priority: 13.11.2000 JP 2000003447
(71) Applicant: Sony Computer Entertainment Inc., Tokyo 107-0052 (JP)
(72) Inventor: NAKAMURA, Takashi c/o Sony Comp. Entertainmt INC., Tokyo 107-0052 (JP); TANAKA, Makoto c/o Sony comp Entertainmt Inc., Tokyo 107-0052 (JP); INUI, Tsutomu c/o Sony Comp. entertainmt Inc., Tokyo 107-0052 (JP)
(74) Representative: Horner, David Richard
(86) International application number: JP0109904
(87) International publication number: WO02039452

(57) **Abstract**

Side frame plates 20, 20 are mounted on both the sides 13a, 13b of an external storage device 10. One side frame plate 20 is furnished with leaf springs 29 which lie in touch with one side wall surface 53 of an accommodation housing 50 and which push the external storage device 10 toward the other side wall 53. Besides, the upper ends of frame plates proper 21 are formed with protrusions 26 which make the full width Wa of the side frame plates 20 longer than the spacing H between the top and bottom wall surfaces 51, 52 of the accommodation housing 50. The protrusions 26 are collapsed by plastic deformation in the process of accommodating the external storage device into the accommodation housing 50.

Owing to the above construction, reduction in the size of the accommodation housing 50 for accommodating the external storage device 10 can be achieved.

## Description

### TECHNICAL FIELD

The present invention relates to an external storage device unit which includes an external storage device and in which the external storage device is built in the body casing of an information processor, an information processor which includes the external storage device unit, and frame components for an external storage device.

### BACKGROUND ART

An information processor such as game apparatus is desired to have a built-in external storage device for the purpose of temporarily storing a game status etc.

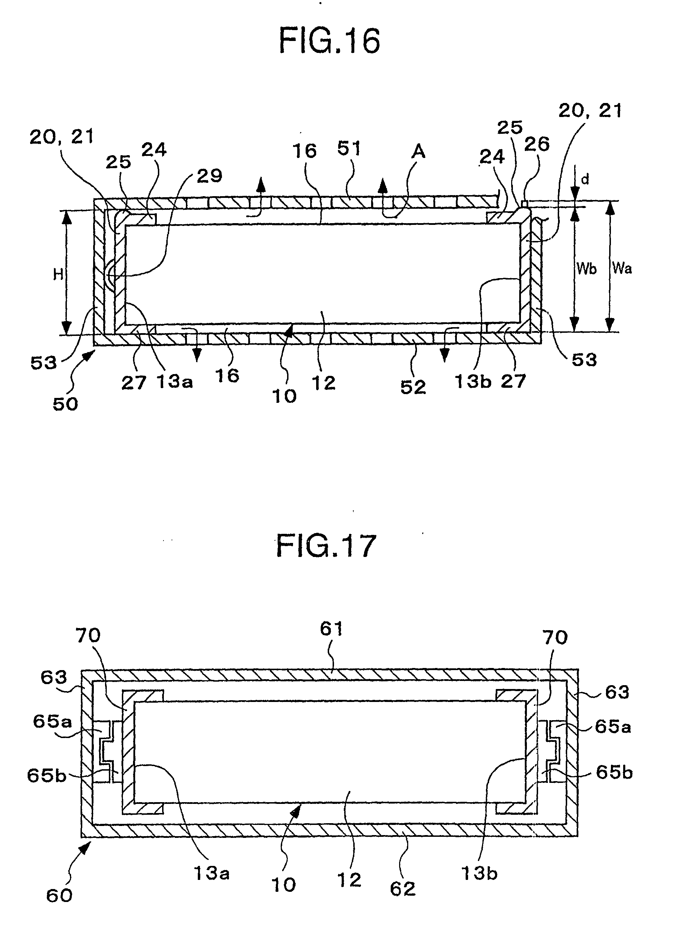

In general, in an information processor such as a personal computer, for the purpose of securely putting an external storage device in an accommodation housing within an apparatus body, as shown in Fig. 17, side frame plates 70, 70 are respectively mounted on both the sides 13a, 13b of the external storage device 10, and either the side frame plates 70, 70 or the side walls 63, 63 of the accommodation housing 60 is furnished with concave guiderails 65a, while the other is furnished with convex guiderails 65b.

In the prior art, the pair of guiderails 65a, 65b, 65a, 65b are disposed between each of the sides 13a, 13b of the external storage device 10 and the corresponding side wall 63, 63 of the accommodation housing 60, in other words, the guiderails are disposed on both the side parts of the external storage device, resulting in the problem that comparatively large spaces are required between the external storage device and the accommodation housing, so the size of the accommodation housing 60 is enlarged. Moreover, the guiderails 65a, 65b need to be precisely worked so as to prevent play from occurring, resulting in the problem that the cost of manufacture increases.

### DISCLOSURE OF THE INVENTION

In view of such problems of the prior art, the present invention has for its object to provide an external storage device unit which can avoid enlargement in the size of an accommodation housing for accommodating an external storage device and which can curtail the cost of manufacture, an information processor which includes the external storage device unit, and frame components for an external storage device.

An external storage device unit for accomplishing the object is an external storage device having an external storage device which includes a case being approximately in the shape of a rectangular parallelepiped and accommodating storage media therein, and which is to be built in an accommodation housing disposed in a body casing of an information processor, said external storage device unit comprising:
an elastic member provided on one of a pair of both side surfaces opposing to each other, among a plurality of outer surfaces of the case of the external storage device, which lies in touch with an inner wall surface of the accommodation housing and which pushes said external storage device in the direction of coming away from the inner wall surface.

Besides, another external storage device unit for accomplishing the object is
an external storage device having an external storage device which includes a case being approximately in the shape of a rectangular parallelepiped and accommodating storage media therein, and which is to be built in an accommodation housing disposed in a body casing of an information processor, said external storage device unit comprising:
side frame plates respectively mounted on a pair of both side surfaces opposing to each other, among a plurality of outer surfaces of the case of the external storage device; wherein each of said side frame plates includes
a frame plate proper whose width is slightly smaller than a spacing between a pair of inner wall surfaces being approximately perpendicular to the pair of both side surfaces of said case, among inner wall surfaces of said accommodation housing, and a protrusion which protrudes from the frame plate proper toward one of the pair of inner wall surfaces; and
a full width of said each side frame plate including the protrusion being longer than the spacing between said pair of inner wall surfaces, the protrusions being plastically deformed in touch with said one inner wall surface in a process in which said external storage device with said side frame plates mounted thereon is inserted into said accommodation housing, and once said external storage device having been inserted in said accommodation housing, the width of said frame plate proper including the plastically deformed protrusion is substantially equal to said spacing between said pair of inner wall surfaces.

An information processor for accomplishing the object is characterized by comprising:
the external storage device unit and said accommodation housing as defined in any one of the foregoing;
wherein said accommodation housing includes inner wall surfaces which oppose to the plurality of outer surfaces of said case of said external storage device, respectively; gaps are defined between the inner wall surfaces and the corresponding outer surfaces of said case; and through holes are formed in at least one of said inner wall surfaces.

According to the present invention disclosed above, the elastic member and/or the protrusion which lies in touch with one of the pair of wall surfaces of the accommodation housing opposing to each other is disposed to firmly accommodate the external storage device in the accommodation housing, so that the size of the accommodation housing can be made smaller than in case of disposing guiderails on the pair of wall surfaces, respectively. Moreover, since the elastic member and the protrusion need not be worked so precisely as the guiderails, the cost of manufacture can be suppressed.

### BRIEF DESCRIPTION OF THE DRAWINGS

Fig. 1 is a schematic circuit block diagram of a game apparatus in an embodiment according to the present invention.
Fig. 2 is a perspective view of the essential portions of a game apparatus body, and an external storage device in the embodiment according to the present invention.
Fig. 3 is an exploded perspective view of the external storage device unit in the embodiment according to the present invention.
Fig. 4 is a plan view of an external storage device in the embodiment according to the present invention.
Fig. 5 is a front view of the external storage device in the embodiment according to the present invention.
Fig. 6 is a left side view of the external storage device in the embodiment according to the present invention.
Fig. 7 is a front view of a cover in the embodiment according to the present invention.
Fig. 8 is a plan view of the cover in the embodiment according to the present invention.
Fig. 9 is a rear view of the cover in the embodiment according to the present invention.
Fig. 10 is a side view of the cover in the embodiment according to the present invention.
Fig. 11 is a front view of a communication connector in the embodiment according to the present invention.
Fig. 12 is a sectional view taken along line XII - XII in Fig. 11.
Fig. 13 is a sectional view of the essential portions of the cover in the embodiment according to the present invention.
Fig. 14 is a side view, partially cut away, of the external storage device unit in the embodiment according to the present invention.
Figs. 15A and 15B are explanatory views showing the relationship between an accommodation housing and the external storage device in the embodiment according to the present invention.
Fig. 16 is a model-like front view of the external storage device unit within the accommodation housing in the embodiment according to the present invention.
Fig. 17 is a schematic front view of an external storage device unit in an accommodation housing in the prior art.
Fig. 18 is an explanatory view showing a check operation for a serial number as proceeds between the external storage device and the game apparatus body, in the embodiment according to the present invention.
Fig. 19 is an explanatory view showing a check operation for a serial number as proceeds between the external storage device and a server, in the embodiment according to the present invention.

### BEST MODE FOR CARRYING OUT THE INVENTION

Now, an embodiment of an information processor according to the present invention will be described with reference to the drawings.

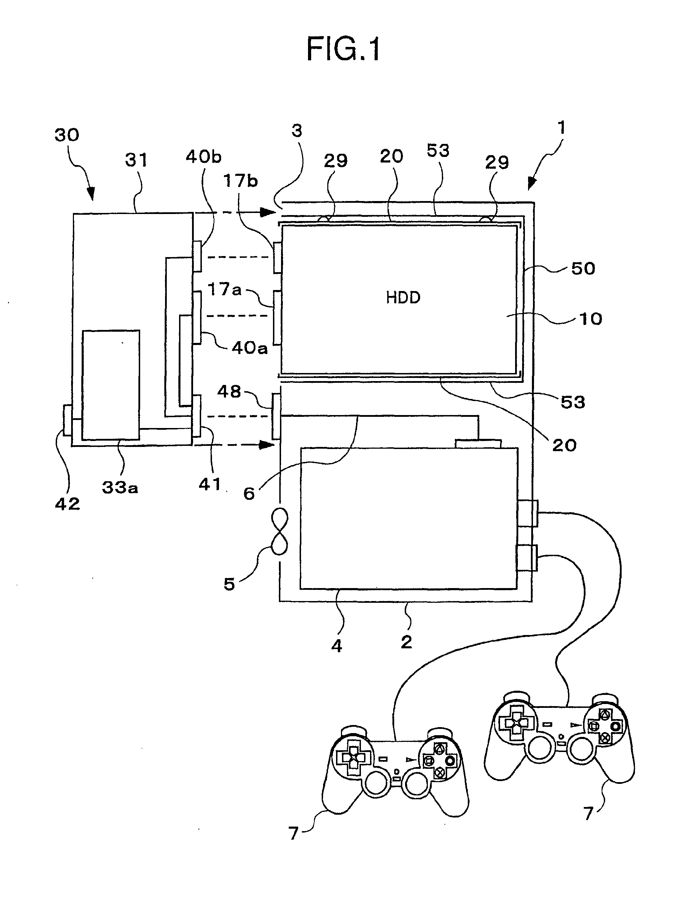

The information processor in this embodiment is a game apparatus having functions as an entertainment apparatus. As shown in Fig. 1, it includes a game-apparatus body 1, an external storage device 10 which is accommodated into the interior through the opening 3 of a game-apparatus body casing 2, a cover 30 which closes up the opening 3 of the body casing 2, and controllers 7 which are operated by players. By the way, in this embodiment, an external storage device unit is constructed having the external storage device 10, the cover 30, and side frame plates 20 as well as leaf springs 29 to be explained later.

Disposed in the body casing 2 are an accommodation housing 50 for the external storage device, a mother board 4 on which various electronic elements etc. are installed, a cooling fan 5, a DVD drive (not shown) which serves to reproduce game software, movie software etc., a power supply circuit (not shown), and so forth.

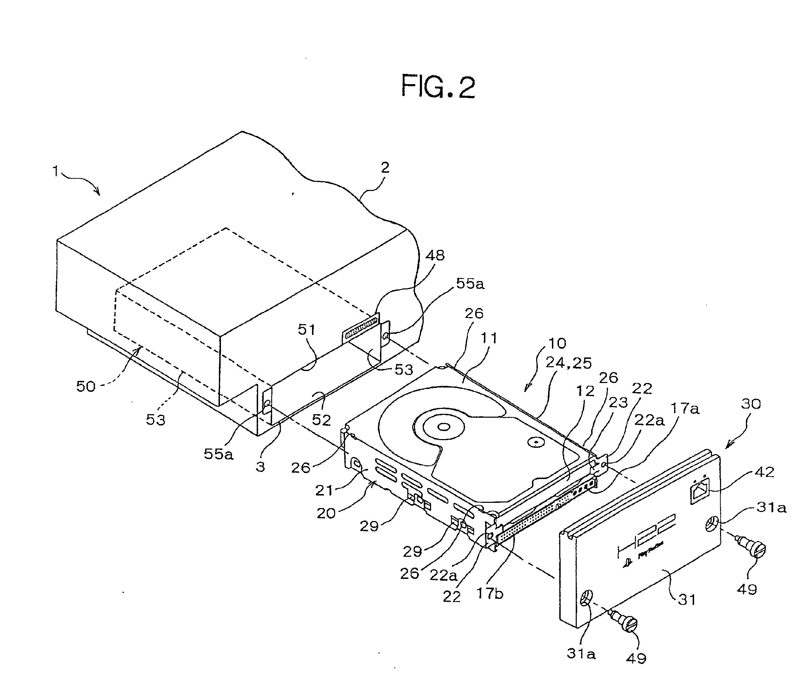

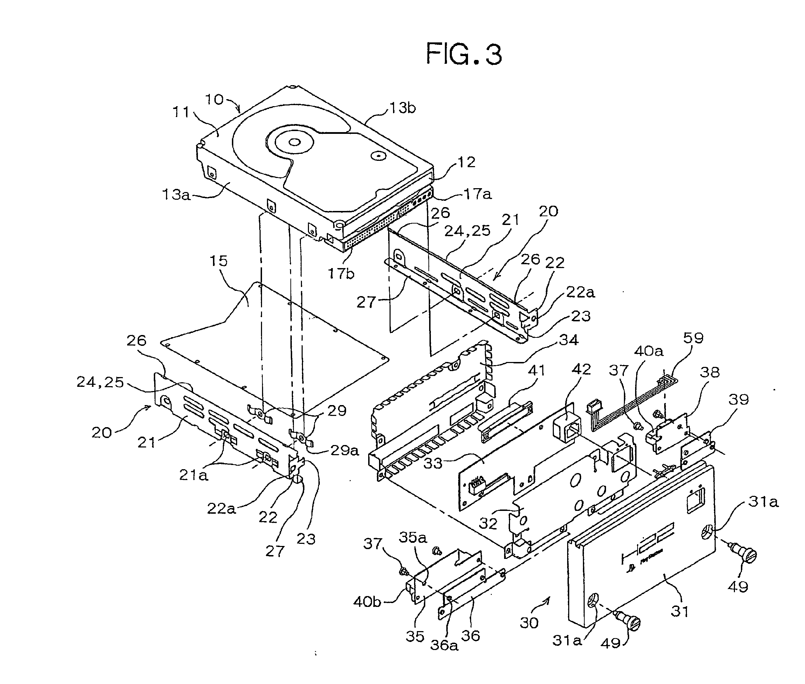

The external storage device 10 is a hard disk drive (HDD), in which data related with a game, such as a game status and a game program, are stored, and besides, data from various broadcasting media, data obtained through the Internet, etc. are stored. As shown in Figs. 2 and 3, the external storage device 10 includes a case 11 which is substantially in the shape of a rectangular parallelepiped and in which magnetic disks are mounted, and a power supply connector 17a and a signal connector 17b being external splicing connectors which are disposed on one surface (hereinbelow, termed the "front surface 12") of the case 11. The part of the case 11 being the bottom surface thereof is open, and the opening is covered with a thin insulating sheet 15 (Fig. 3). The insulating sheet 15 is substantially rectangular in conformity with the rectangular opening, but the rear side thereof (front side thereof with respect to the accommodating direction of the external storage device 10) is cut away into the shape of letter V.

As shown in Figs. 3 - 6, the case sides 13a, 13b of the external storage device 10 are respectively furnished with the side frame plates 20 which cover the corresponding sides 13a, 13b. Each of the side frame plates 20 includes a rectangular frame plate proper 21 which substantially covers the corresponding case side 13a or 13b, a fixing flange 22 and an apparatus-front pressing flange 23 which are formed at the front part of the frame plate proper 21, an apparatus-top pressing flange 24 which is formed at the upper part of the frame plate proper 21, and an apparatus-bottom pressing flange 27 which is formed at the lower part of the frame plate proper 21. The flanges are formed substantially at right angles to the frame plate proper 21. Herein, as shown in Fig. 16, the apparatus-top pressing flange 24 is once bent 180° relative to the frame plate proper 21 and is thereafter bent back 90° again in the reverse direction, with the result that it defines 90° relative to the frame plate proper 21. The corners between the frame plates proper 21 and the apparatus-top pressing flanges 24 form rails 25 when the external storage device 10 bearing the side frame plates 20 is inserted into the accommodation housing. Each of the rails 25 is formed with upward protrusions 26 at the front end and rear end thereof.

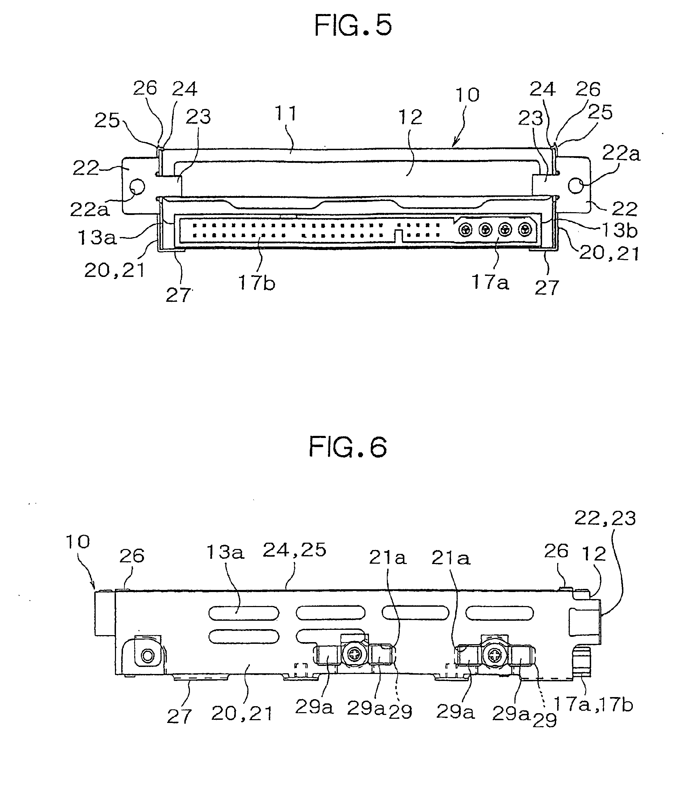

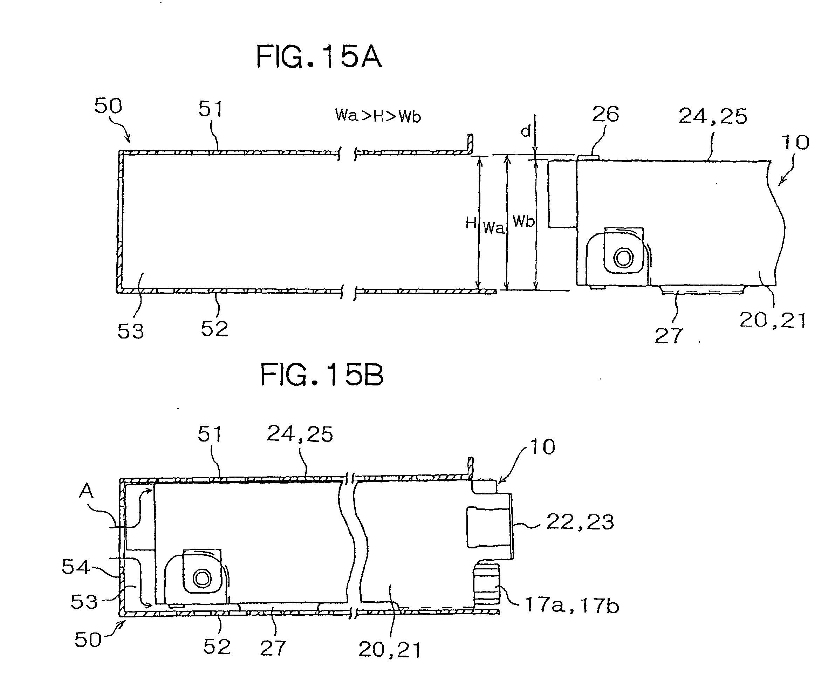

As shown in Figs. 15A and 16, the width Wb of the side frame plate 20 except the protrusions 26 is a length which permits the side frame plate 20 except the protrusions 26 to reliably enter the accommodation housing 50, and which is slightly shorter than the spacing H between the top wall surface 51 and bottom wall surface 52 of the accommodation housing 50. The full width Wa of the side frame plate 20 including the protrusions 26 is a length at which, even when the side frame plate 20 including the protrusions 26 is intended to be inserted into the accommodation housing 50, its end hitches on the opening edge of the accommodation housing 50, and which is slightly longer than the spacing H between the top wall surface 51 and bottom wall surface 52 of the accommodation housing 50. That is, the projecting magnitude d of each protrusion 26 is very slight, and it is 0.5mm or below in this embodiment. By the way, in Figs. 5, 6, 14, 15A and 16, the projecting magnitude is depicted somewhat larger in order to clarify the existence of the protrusions 26.

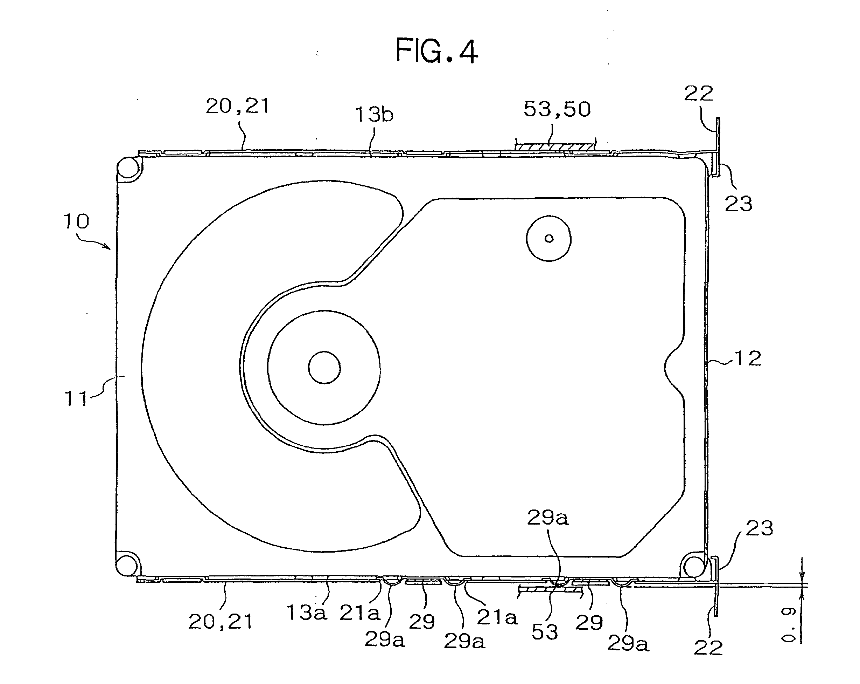

As shown in Figs. 3 and 4, one 20 of the two side frame plates 20, 20 is provided with the leaf springs 29 which function as elastic members. Each leaf spring 29 is obtained by partially shaping a metallic plate to be circularly arcuate. The frame plate proper 21 is formed with a plurality of spring openings 21a, 21a. The leaf springs 29 are mounted on the frame plate proper 21 so that their circularly arcuate parts 29a may protrude from the spring openings 21a. Incidentally, the apparatus-top pressing flange 24 is omitted from the illustration of Fig. 4 in order to facilitate understanding the relationship between the frame plate proper 21 and the leaf springs 29.

As shown in Fig. 2, the accommodation housing 50 for the external storage device 10 defines the shape of a rectangular parallelepiped in conformity with the outside shape of the external storage device 10. Disposed at the front end of the wall surface 51 of the accommodation housing 50 is a body connector for a cover side 48 which serves to receive and deliver signals etc. from and to the external storage device etc.

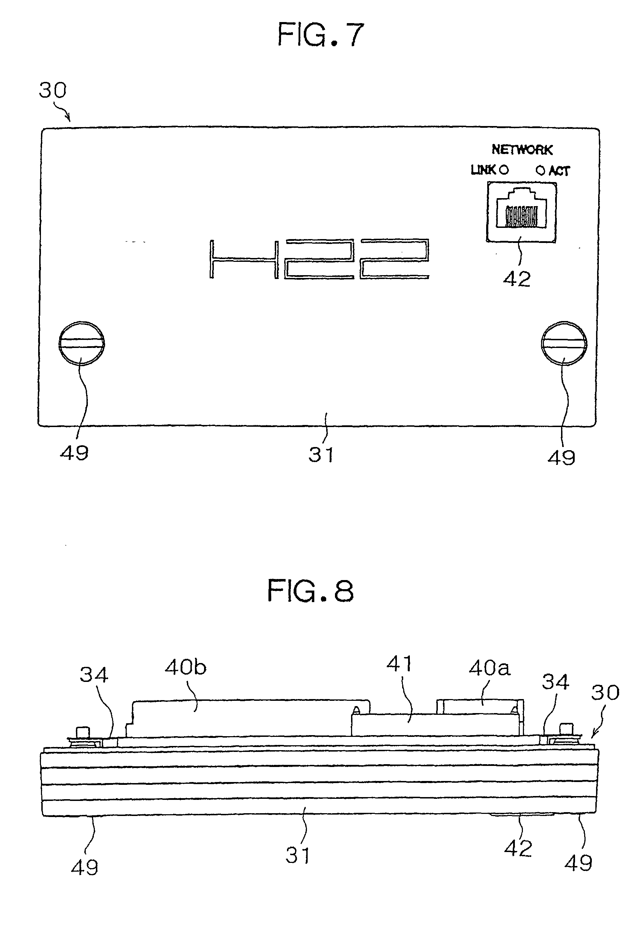

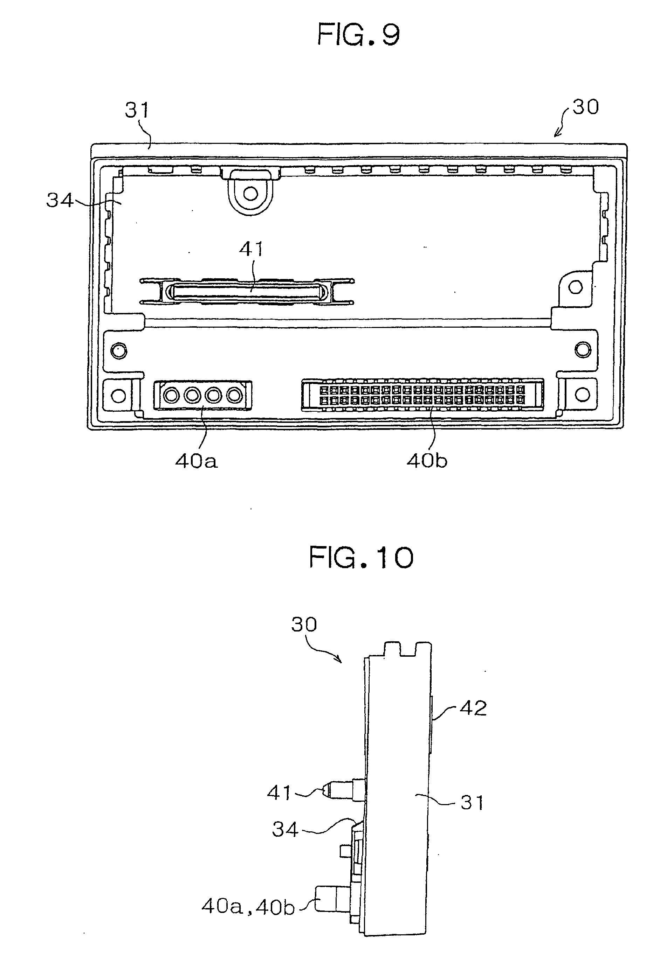

As shown in Fig. 3, the cover 30 includes a cover proper 31 which is made of a resin, a base plate 32 which is fixed to the rear surface of the cover proper 31, a circuit board 33 which is fixed to the base plate 32, and an electromagnetic shield cover 34 which covers the circuit board 33. Attached to the base plate 32 are a power supply connector for a storage device side 40a which is connected to the power supply connector 17a of the external storage device 10, and a signal connector for the storage device side 40b which is connected to the signal connector 17b of the external storage device 10. Mounted on the circuit board 33 are a connector for a body side 41 which is connected with the body connector for the cover side 48 (Fig. 2) disposed in the body casing 2, a communication connector 42 which conforms to the Ethernet and which serves for communications with the exterior, and a communication circuit module 33a (Fig. 1) which processes transmission/reception data to and from the communication connector 42. As shown in Figs. 7 and 8, the communication connector 42 is disposed so that its connection surface may be exposed from the front surface of the cover proper 31. Besides, as shown in Figs. 8 - 10, the power supply connector for the storage device side 40a, the signal connector for the storage device side 40b, and the connector for the body side 41 are disposed so that their respective connection surfaces may be exposed from the electromagnetic shield cover 34 on the rear surface side of the cover proper 31. The connector for the body side 41 is electrically connected with the circuit board 33 by a cable 59 (Fig. 3). Therefore, the connector for the body side 41 is electrically connected with the communication connector 42 through the communication circuit module 33a mounted on the circuit board 33. Further, the connector for the body side 41 is electrically connected with the power supply connector for the storage device side 40a and the signal connector for the storage device side 40b by the cable 59 and wiring lines formed on the circuit board 33. That is, power supply and signals are fed to and exchanged between the game apparatus body and the external storage device 10 via the cover 30 which closes up the opening 3 for accommodating the external storage device 10 in the game apparatus body 1 as shown in Fig. 1.

As described above, in this embodiment, the power supply connector for the storage device side 40a and the signal connector for the storage device side 40b are disposed in the cover 30 as shown in Fig. 1, so that spaces for accommodating these connectors 40a, 40b need not be held in the game-apparatus body casing 2. Moreover, the position of wiring 6 for connecting the mother board 4 of the game apparatus and the external storage device 10 can be optionally altered at the stage of design by appropriately setting the position of the connector for the body side 41, in other words, by appropriately setting the cover-side body connector 48 which is to be connected to the connector for the body side 41. In this embodiment, accordingly, the enlarged size of the body casing, the design change thereof, etc. can be avoided.

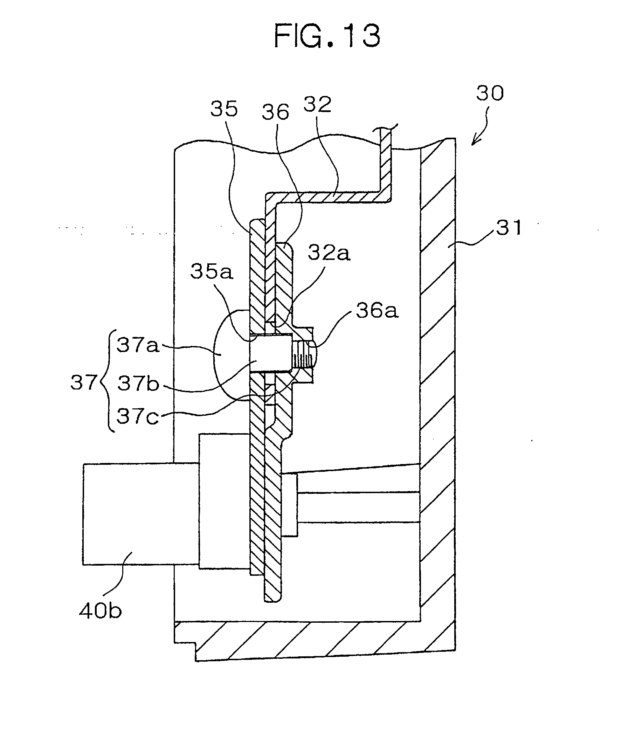

As shown in Figs. 3 and 13, the storage device-side signal connector is fixed to a connector fixation plate 35. Screws for mounting the connector fixation plate 35 on the base plate 32 are shoulder screws 37, each of which includes a screw head 37a, a cylindrical portion 37b formed with no male thread, and a threaded portion 37c having an outside diameter smaller than that of the cylindrical portion 37b. A screw receiver plate 36 formed with female screw holes 36a is disposed in order to receive the threaded portions 37c of the shoulder screw 37. The screw receiver plate 36 is arranged so as to hold the base plate 32 between it and the connector fixation plate 35. The connector fixation plate 35 is formed with insertion holes 35a each having an inside diameter substantially equal to the outside diameter of the cylindrical portion 37b of the shoulder screw 37, while the base plate 32 is formed with insertion holes 32a each having an inside diameter of about 2mm larger than the outside diameter of the cylindrical portion 37b of the shoulder screw 37. The shoulder screws 37 are threadably engaged with the female screw holes 36a of the screw receiver plate 36 by passing the through holes 35a of the connector fixation plate 35 and those 32a of the base plate 32. On this occasion, the cylindrical portion 37b of each shoulder screw 37 is located in the corresponding through hole 32a of the base plate 32. As a result, the connector fixation plate 35 and the screw receiver plate 36 can be moved relative to the base plate 32 in correspondence with the difference between the inside diameter of each through hole 32a of the base plate 32 and the outside diameter of each cylindrical portion 37c of the shoulder screw 37. That is, the storage device-side signal connector 40b is disposed so as to be movable relative to the cover proper 31 and the base plate 32. Likewise to the signal connector for the storage device side 40b, the power supply connector for the storage device side 40a is also disposed so as to be movable relative to the base plate 32 owing to a connector fixation plate 38, a screw receiver plate 39 and shoulder screws 37 as shown in Fig. 3.

In general, the intervals of pins in the power supply connector of an external storage device and those of pins in the signal connector thereof are very accurate, and they fall within very narrow error ranges irrespective of the manufacturer of the external storage device. Besides, the layout of the power supply connector as well as the signal connector with respect to the case of the external storage device is basically similar irrespective of the manufacturer. The relative positional relationship between the power supply connector and the signal connector, however, exhibits some difference even among the articles of an identical manufacturer and exhibits a difference of, for example, near 1mm among different manufacturers. In this regard, it is assumed that, in the case where the respective connectors 40a, 40b to be connected to the power supply connector 17a and the signal connector 17b are mounted on the cover 30 as in this embodiment, these connectors 40a, 40b be fixed to the cover 30. Then, since the relative positional relationship between the external splicing connectors 17a, 17b of the external storage device 10 exhibits the comparatively large differences among the manufacturers as explained above, there arises the phenomenon that the connectors can be connected with the cover as to the external storage device of a certain one of the manufacturers, whereas the connectors cannot be connected with the cover as to the external storage device of another. In this embodiment, therefore, the power supply connector for the storage device side 40a and the signal connector for the storage device side 40b are mounted so as to be movable relative to the cover proper 31. Incidentally, although both the power supply connector for the storage device side 40a and the signal connector for the storage device side 40b are mounted so as to be movable relative to the cover proper 31 in this embodiment, it is needless to say that only either of them may well be mounted so as to be movable relative to the cover proper 31.

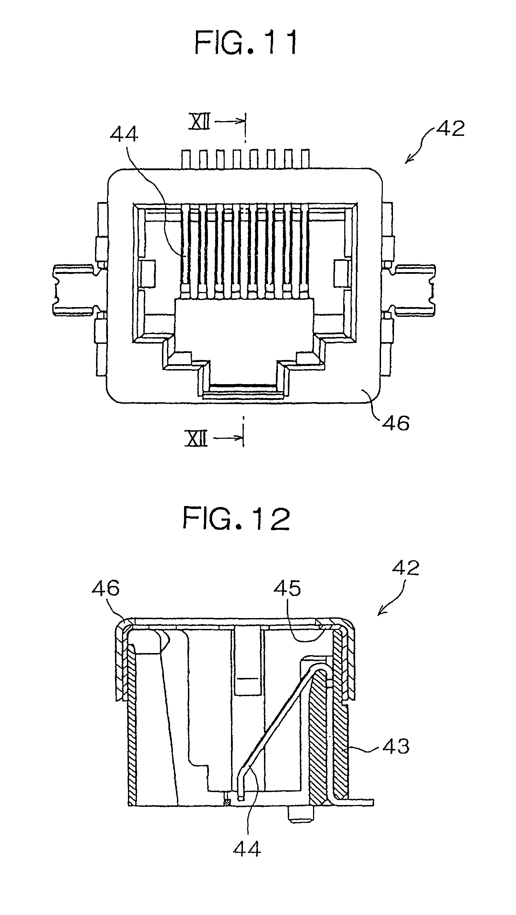

As shown in Figs. 11 and 12, the communication connector 42 whose connection surface is exposed from the front surface of the cover proper 31 as explained before includes a connector housing 43 which is formed of an insulating resin, a plurality of connection pins 44, 44, ··· which are disposed in the connector housing 43, a metallic magnetic shield member 45 which covers parts of the side surfaces of the connector housing 43 and the connection surface of this communication connector, and a resin cover 46 which covers up the front surface of the magnetic shield member 45. In this manner, the communication connector 42 in this embodiment has its front surface side covered with the magnetic shield member 45, so that it is superior against electromagnetic interference. Moreover, the front surface of the magnetic shield member 45 is covered up with the resin cover 46, so that it is superior in view of protection of the fingers etc. of the players.

In using the external storage device 10, this external storage device 10 on which the side frame plates 20, 20 are mounted as shown in Fig. 2 is first pushed into the accommodation housing 50 in the game-apparatus body 1. In this process, as shown in Fig. 4, the circularly arcuate portions 29a of the leaf springs 29 attached to one side frame plate 20 come into touch with one 53 of a pair of side wall surfaces 53, 53 of the accommodation housing 50 and push the external storage device 10 toward the other side wall surface 53. Besides, since the full width Wa of the side frame plate 20 is slightly longer than the spacing H between the top wall surface 51 and bottom wall surface 52 of the accommodation housing 50 as explained with reference to Figs. 15A and 16 before, the protrusions 26 of the side frame plate 20 hit the edge of the top wall surface of the accommodation housing 50 and collapse by plastic deformation in the process for accommodating the external storage device 10. Thus, as shown in Figs. 15B and 16, the full width of the side frame plate 20 becomes substantially equal to the spacing H between the top wall surface 51 and bottom wall surface 52 of the accommodation housing 50, and the external storage device 10 enters into the accommodation housing. Incidentally, the protrusion 26 in Fig. 16 is illustrated in a state where it does not undergo the plastic deformation yet before the accommodation of the external storage device 10.

As described above, in this embodiment, the sideward position of the external storage device 10 is restrained in such a way that the external storage device 10 is pushed against one side wall surface 53 of the accommodation housing 50 by utilizing the elastic forces of the leaf springs 29 disposed on only one side of the external storage device 10, while the vertical position of the external storage device 10 is restrained in such a way that the protrusions 26 are held in close contact with the top wall surface 51 of the accommodation housing 50 by plastically deforming and collapsing the protrusions 26 of the side frame plates 20 in the accommodation process. Thus, reduction in the size of the accommodation housing 50 can be achieved for the reason that the guiderails 65a, 65b as in the prior art (Fig. 17) need not be respectively mounted on the pair of inner walls of the accommodation housing 60 opposing to each other, and that comparatively large occupation spaces are not required in contrast to the guiderails 65a, 65b. Further, in this embodiment, the cost of manufacture can be suppressed for the reason that the leaf springs 29 and the protrusions 26 need not be worked so precisely as the guiderails 65a, 65b. By the way, in this embodiment (Fig. 16), the rails 25 are formed at the upper ends of the side frame plates 20 and are overlaid with the protrusions 26, and hence, the spacing H between the top and bottom wall surfaces 51, 52 of the accommodation housing 50 seems to become larger than the spacing between the top and bottom wall surfaces 61, 62 of the accommodation housing 60 in the prior art (Fig. 17). However, in this embodiment, the protrusions 26 of the side frame plates 20 collapse in the accommodating process, so that the upper and lower ends of the side frame plates 20 come into close contact with the top and bottom wall surfaces 51, 52 of the accommodation housing 50, respectively, whereas in the prior art, the upper and lower ends of the side frame plates 70 are respectively out of tough with the top and bottom wall surfaces 61, 62 of the accommodation housing 60 in order that the guiderails 65a, 65b disposed on both the sides of the external storage device 10 may slide smoothly. Therefore, this embodiment can lessen also the height of the accommodation housing.

Besides, since the bottom of the external storage device 10 is covered with the thin insulating sheet of high flexibility 15 (Fig. 3) in this embodiment, the insulating sheet 15 might hitch on any part of the bottom wall surface 52 of the accommodation housing 50 in the process in which the external storage device 10 is inserted into the accommodation housing 50. In this embodiment, therefore, the rear side of the insulating sheet 15 is cut away into the shape of letter V, and the rear end side of the insulating sheet 15 (the front end side thereof with respect to the accommodating direction of the external storage device 10) is not made orthogonal to the accommodating direction, but is made slant thereto. Thus, even when the insulating sheet is about to hitch on any part of the bottom wall surface 52 of the accommodation housing 50, it can easily escape from the hitch.

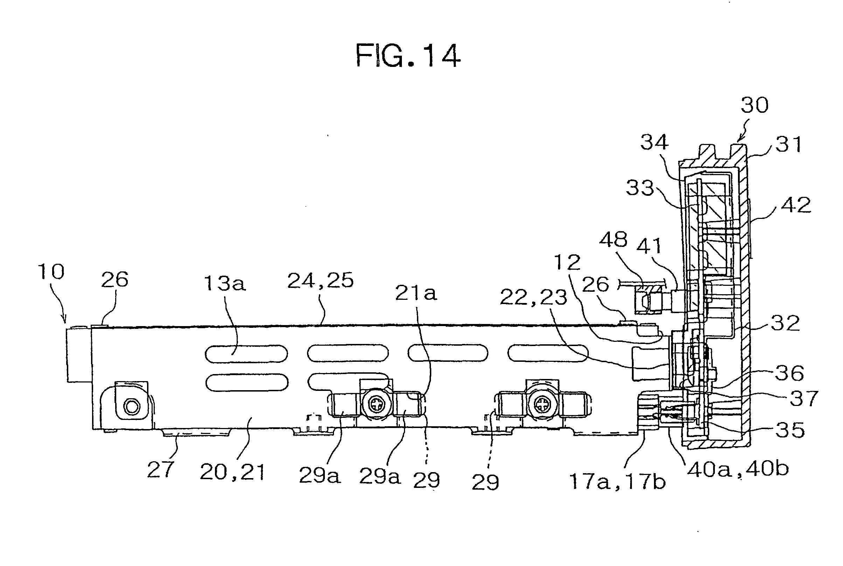

When the external storage device 10 has been accommodated into the accommodation housing 50, the opening 3 of the apparatus body 1 is closed up with the cover 30 as shown in Fig. 2. On this occasion, the cover 30 is led onto the body side so that, as shown in Fig. 14, the body-side connector 41 mounted on the cover 30 may be connected to the cover-side body connector 48 which is fixed to the upper part of the accommodation housing 50. In the process in which the body-side connector 41 of the cover 30 is connected to the cover-side body connector 48 of the apparatus body, the power supply connector for the storage device side 40a and the signal connector for the storage device side 40b which are disposed in the cover 30 are respectively moved relative to the cover proper 31, thereby to coincide with the positions of the power supply connector 17a and signal connector 17b of the external storage device 10 and to be connected with these connectors 17a, 17b. In this manner, in the process for connecting the body-side connector 41 of the cover 30 to the cover-side body connector 48 of the apparatus body, the power supply connector for the storage device side 40a and the signal connector for the storage device side 40b which are disposed in the cover 30 are respectively moved relative to the cover proper 31 so as to coincide with the positions of the power supply connector 17a and signal connector 17b of the external storage device 10. This operational feature is grounded on those constructions of the connectors to be connected to each other in which the outside diameters of the tip parts of pins disposed in the connectors on one side decrease gradually toward the tip sides thereof, while the inside diameters of the tip parts of holes disposed in the connectors on the other side increase gradually toward the tip sides thereof, so that even when the positions of the mating pins and holes deviate to some extent, the shapes of the tip parts of the pins and those of the holes function as guides convenient for the positioning of the mating pins and holes, so as to reliably receive the pins in the holes. A further ground for the operational feature is that the shapes of the housings of the connectors on both the sides similarly function as guides convenient for the positioning of the mating pins and holes.

When, as shown in Fig. 14, the body connector for the cover side 48 of the apparatus body and the connector for the body side 41 of the cover 30 have been connected to each other, and the power supply connector for the storage device side 40a as well as the signal connector for the storage device side 40b of the cover 30 and the power supply connector 17a as well as the signal connector 17b of the external storage device 10 have been respectively connected to each other, cover fixation screws 49 are put in screw holes 31a which are formed in the cover proper 31 as shown in Fig. 2, and the threaded portion of each screw 49 on the tip side thereof is threadably engaged with the screw hole 55a of the accommodation housing 50 through the screw hole 22a of the corresponding side frame plate 20, whereby the cover 30 and the external storage device 10 are fixed to the apparatus body 1.

When the cover 30 has been shut to completely accommodate the external storage device 10, this external storage device 10 can be driven and controlled by a command from the apparatus body 1. Since the external storage device 10 generates heat during the drive thereof, it needs to be cooled. In this embodiment, as shown in Figs. 15B and 16, a large number of through holes are formed in the top and bottom wall surfaces 51, 52 and rear wall surface 54 of the accommodation housing 50, and gaps are held between the top surface 16 of the external storage device 10 and the top wall surface 51 of the accommodation housing 50 and between the bottom surface 16 of the external storage device 10 and the bottom wall surface 52 of the accommodation housing 50. Therefore, cooling air A flows into the gaps between the accommodation housing 50 and the external storage device 10 and is exhausted therefrom, so that the external storage device 10 is cooled.

Usually, in order to prevent a storage medium from being illegally used, a serial number is written in the storage medium. When altered, the serial number is meaningless. In order to prevent the alteration from occurring, therefore, such a method as follows is adopted:
1) The serial number is written into an area into which data cannot be written by ordinary means.
2) The serial number is written into a device (ROM or the like) in which data written once cannot be altered.

With the method 1), however, when writable means has been found, the alteration becomes possible, and the serial number becomes untrustworthy. On the other hand, with the method 2), although the alteration itself is impossible, cost increases due to the use of the device such as ROM, and besides, the device itself might be exchanged.

In this embodiment, therefore, not only the plaintext serial number of the external storage device 10, but also data obtained by encrypting the serial number, are registered in the ordinary data storage area of the external storage device 10 at the stage of manufacture.

In encrypting the serial number, such specific means as follows is considered:
(1) The serial number is encrypted with a specified secret key.
(2) The "Integrity Check Value" employed in the field of encryption is computed.
Incidentally, the "Integrity Check Value" is a kind of encrypting process, which also requires a secret key.

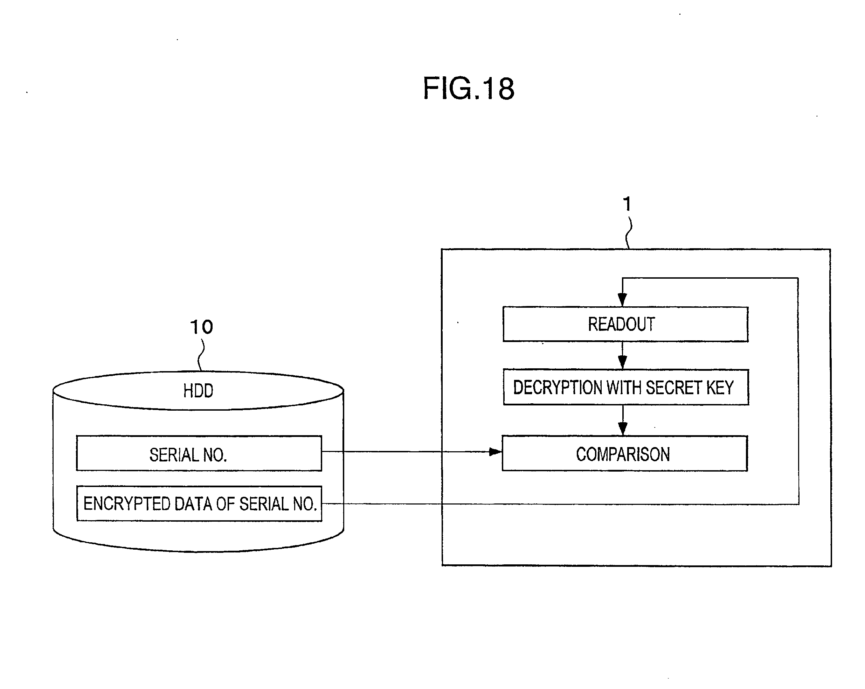

As shown in Fig. 18, the game apparatus body 1 reads out both the plaintext serial number and the encrypted data of the serial number registered in the external storage device 10, it decrypts the encrypted data by the specific expedient mentioned above, and it compares the plaintext serial number with the decrypted data. Here, when as the result of the comparison, both agree, it is decided that the serial number has not been altered. When as the result of the comparison, both disagree, it is decided that the serial number has been altered, and an alteration management flag, for example, is set at "1", whereupon the access of the game apparatus body 1 to this external storage device 10 is inhibited.

In general, unless the secret key of data is known, encrypted data cannot be created from the data, and naturally the data cannot be altered. Therefore, although the plaintext serial number is alterable, the encrypted data of the serial number is basically unalterable without knowing the secret key.

As described above, in this embodiment, the serial number is prevented from being altered, and even if it has been altered, the alteration can be detected. Further, in this embodiment, the serial number is registered in the ordinary data storage area, so that cost can be made lower than with the foregoing method 2) which employs the ROM or the like. Moreover, the management of the secret key in this embodiment is easier and more reliable than the foregoing method 1) which keeps the write means secret, so that the reliability of the serial number can be heightened more.

By the way, in this embodiment, a method in which only the data obtained by encrypting the serial number is registered (the plaintext serial number is not registered) is also considered. With this method, however, all of equipment (men) which (who) need to refer to the serial number must know the secret key. The degree of difficulty of the management of the secret key heightens more as the number of the equipment (men) knowing the secret key increases more. In this embodiment, therefore, the plaintext serial number is also registered so that, while the number of the equipment knowing the secret key is decreased to the utmost, the mere reference to the serial number can be made without the secret key.

Besides, in this embodiment, the plaintext serial number and one encrypted data item thereof are registered, but data obtained by encrypting the serial number in accordance with another encrypting method may well be further registered so as to heighten the reliability of the serial number more.

Meanwhile, it has been stated above that the game apparatus body 1 checks the serial number of the external storage device 10. Alternatively, a server may well be permitted to check the serial number of the external storage device 10 which is connected to the game apparatus body 1 held in network connection.

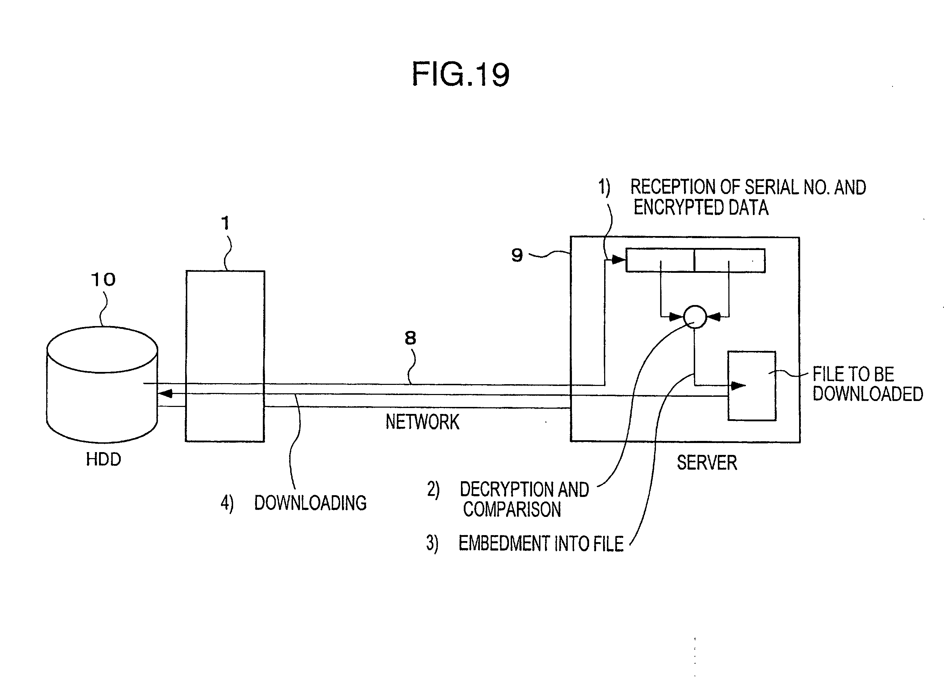

In a case where, as shown in Fig. 19, a file managed by a server 9 is to be downloaded into an external storage device 10 through a network 8, a plaintext serial number and the encrypted data thereof registered in the external storage device 10 are first sent to the server 9 through a game apparatus body 1.

The server 9 decrypts the encrypted data of the serial number sent in, with a secret key in its possession, and it compares the decrypted data with the plaintext serial number similarly sent in. If both disagree, the server does not allow downloading the file. Besides, in a case where both have agreed, the server collates the pertinent serial number with an illegal number list. Assuming that the pertinent serial number be included in the illegal number list, the server regards the current access as being made by a user who illegally distributed any file before, and it does not allow the download.

In a case where the plaintext serial number and the encrypted data thereof have agreed and where the pertinent serial number is not contained in the illegal number list, the server embeds the pertinent serial number into the file by digital watermark technology and allow the user to download the resulting file.

As explained above, in this example, it is possible to prevent the file from being downloaded into the external storage device 10 whose serial number has been altered, or into the external storage device 10 whose serial number has been listed in the illegal number list once.

In general, a file which is downloaded from a server has copyright, and a user who has legally downloaded the file is allowed to watch/reproduce the file, but he/she is prohibited from duplicating the file and distributing the duplicate copy to a third party without permission. In a case where the file downloaded from the server 9 through the network 8 was illegally duplicated and where the duplicate copy was distributed or sold on the network by way of example, a user who made the illegal duplication can be specified in the foregoing way that the serial number is embedded into the file to-be-downloaded by the digital watermark technology beforehand and that the embedded serial number is referred to. Then, the serial number of the user is registered in the illegal number list of the server, and this user cannot download thenceforth.

Besides, it has been stated above that the serial number is previously registered at the stage of manufacture. It is also allowed, however, that at the initial setting stage of the external storage device 10 following the connection thereof to the game apparatus body 1, the game apparatus body 1 writes its serial number as the serial number of the external storage device 10 into the storage area of the external storage device 10. Besides, the game apparatus body 1 reads out the serial number in the external storage device 10 every its start-up, and it operates only when the serial number read out is the same as the serial number managed by itself. Thus, the external storage device 10 once connected to the specified game apparatus body 1 can be prevented from being operated in connection with another game apparatus body. In this way, it is permitted to protect, for example, contents which have been broadcast through a network and stored in an external storage device.

Incidentally, although the present invention is applied to the game apparatus in the foregoing embodiment, it is not restricted thereto, but it may well be applied to, for example, a personal computer which is a sort of general information processor. Besides, although the external storage device 10 in the foregoing embodiment is the hard disk drive in which the magnetic disks are mounted, it may well be an external storage device in which other storage media are mounted.

## Claims

1. An external storage device unit having an external storage device which includes a case being substantially in the shape of a rectangular parallelepiped and accommodating storage media therein, and which is to be built in an accommodation housing disposed in a body casing of an information processor, said external storage device unit comprising:
an elastic member provided on one of a pair of both side surfaces opposing to each other, among a plurality of outer surfaces of the case of the external storage device, which lies in touch with an inner wall surface of the accommodation housing and which pushes said external storage device in the direction of coming away from the inner wall surface.

2. An external storage device unit having an external storage device which includes a case being substantially in the shape of a rectangular parallelepiped and accommodating storage media therein, and which is to be built in an accommodation housing disposed in a body casing of an information processor, said external storage device unit comprising:
side frame plates respectively mounted on a pair of both side surfaces opposing to each other, among a plurality of outer surfaces of the case of the external storage device; and
an elastic member provided on one of the side frame plates respectively mounted on both the side surfaces of said case, which lies in touch with an inner wall surface of the accommodation housing and which pushes said external storage device in the direction of coming away from the inner wall surface.

3. An external storage device unit according to Claim 2, wherein:
each of said side frame plates includes
a frame plate proper whose width is slightly smaller than a spacing between a pair of inner wall surfaces adjoining said inner wall surface touched by the elastic member and opposing to each other, among inner wall surfaces of said accommodation housing, and
a protrusion which protrudes from the frame plate proper toward one of the pair of inner wall surfaces; and
a full width of said each side frame plate including the protrusion being longer than the spacing between said pair of inner wall surfaces,
the protrusions being plastically deformed in touch with said one inner wall surface in a process in which said external storage device with said side frame plates mounted thereon is inserted into said accommodation housing, and
once said external storage device having been inserted in said accommodation housing, the width of said frame plate proper including the plastically deformed protrusion is substantially equal to said spacing between said pair of inner wall surfaces.

4. An external storage device unit having an external storage device which includes a case being substantially in the shape of a rectangular parallelepiped and accommodating storage media therein, and which is to be built in an accommodation housing disposed in a body casing of an information processor, said external storage device unit comprising:
side frame plates respectively mounted on a pair of both side surfaces opposing to each other, among a plurality of outer surfaces of the case of the external storage device; wherein each of said side frame plates includes
a frame plate proper whose width is slightly smaller than a spacing between a pair of inner wall surfaces being approximately perpendicular to the pair of both side surfaces of said case, among inner wall surfaces of said accommodation housing, and
a protrusion which protrudes from the frame plate proper toward one of the pair of inner wall surfaces; and
a full width of said each side frame plate including the protrusion being longer than the spacing between said pair of inner wall surfaces,
the protrusions being plastically deformed in touch with said one inner wall surface in a process in which said external storage device with said side frame plates mounted thereon is inserted into said accommodation housing, and
once said external storage device having been inserted in said accommodation housing, the width of said frame plate proper including the plastically deformed protrusion is substantially equal to said spacing between said pair of inner wall surfaces.

5. An external storage device unit according to any one of Claims 3 to 4, wherein said each frame plate proper includes
a rectilinear rail which extends in the direction of accommodating said external storage device and which is formed at an end thereof nearer to said one inner wall, and
a plurality of the protrusions are formed on the rail.

6. An external storage device unit according to any one of Claims 1 to 5, wherein said external storage device unit comprises
an insulating sheet mounted on one of the plurality of outer surfaces of said case of said external storage device; and
a front end side of the insulating sheet with respect to the direction of accommodating said external storage device into said accommodation housing including a part which is slant to the accommodating direction.

7. An external storage device unit according to any one of Claims 1 to 6, wherein a serial number of said external storage device itself, and data obtained by encrypting the serial number are stored in a data storage area of said external storage device.

8. An information processor which comprises:
an external storage device unit, according to any one of Claims 1 to 7, and
the accommodation housing;
wherein said accommodation housing includes inner wall surfaces which oppose to the plurality of outer surfaces of said case of said external storage device, respectively; gaps are defined between the inner wall surfaces and the corresponding outer surfaces of said case; and through holes are formed in at least one of said inner wall surfaces.

9. A set of frame components for an external storage device mounted on the external storage device which includes a case being approximately in the shape of a rectangular parallelepiped and accommodating storage media therein, and which is to be built in an accommodation housing disposed in a body casing of an information processor, said set of frame components for an external storage device comprising:
side frame plates respectively mounted on a pair of both side surfaces opposing to each other, among a plurality of outer surfaces of the case of the external storage device; and
an elastic member provided on one of the side frame plates respectively mounted on both the side surfaces of said case, which lies in touch with an inner wall surface of the accommodation housing and which pushes said external storage device in the direction of coming away from the inner wall surface.

10. A set of frame components for an external storage device according to Claim 9, wherein each of said side frame plates includes
a frame plate proper whose width is slightly smaller than a spacing between a pair of inner wall surfaces adjoining said inner wall surface touched by the elastic member and opposing to each other, among inner wall surfaces of said accommodation housing, and
a protrusion which protrudes from the frame plate proper toward one of the pair of inner wall surfaces; and
a full width of said each side frame plate including the protrusion being longer than the spacing between said pair of inner wall surfaces,
the protrusions being plastically deformed in touch with said one inner wall surface in a process in which said external storage device with said side frame plates mounted thereon is inserted into said accommodation housing, and
once said external storage device having been inserted in said accommodation housing, the width of said frame plate proper including the plastically deformed protrusion is substantially equal to said spacing between said pair of inner wall surfaces.

11. A set of frame components for an external storage device mounted on the external storage device which includes a case being approximately in the shape of a rectangular parallelepiped and accommodating storage media therein, and which is to be built in an accommodation housing disposed in a body casing of an information processor, said set of frame components for an external storage device comprising:
side frame plates respectively mounted on a pair of both side surfaces opposing to each other, among a plurality of outer surfaces of the case of the external storage device; wherein each of said side frame plates includes
a frame plate proper whose width is slightly smaller than a spacing between a pair of inner wall surfaces being approximately perpendicular to the pair of both side surfaces of said case, among inner wall surfaces of said accommodation housing, and
a protrusion which protrudes from the frame plate proper toward one of the pair of inner wall surfaces; and
a full width of said each side frame plate including the protrusion being longer than the spacing between said pair of inner wall surfaces,
the protrusions being plastically deformed in touch with said one inner wall surface in a process in which said external storage device with said side frame plates mounted thereon is inserted into said accommodation housing, and
once said external storage device having been inserted in said accommodation housing, the width of said frame plate proper including the plastically deformed protrusion is substantially equal to said spacing between said pair of inner wall surface.
